# EUROPÄISCHE PATENTSCHRIFT

(11) **EP 3 305 025 B1**
(45) Veröffentlichungstag und Bekanntmachung des Hinweises auf die Patenterteilung: **11.01.2023**
(21) Anmeldenummer: 16728601.2
(22) Anmeldetag: 30.05.2016
(51) Int. Cl.: H05B 45/10, H05B 45/50, H05B 45/48, H05B 45/395

(54) **BELEUCHTUNGSEINRICHTUNG FÜR FAHRZEUGE**
ILLUMINATING DEVICE FOR VEHICLES
DISPOSITIF D'ÉCLAIRAGE POUR VÉHICULES

(30) Priorität: 01.06.2015 AT 504452015
(43) Veröffentlichungstag der Anmeldung: 11.04.2018
(73) Patentinhaber: ZKW Group GmbH, 3250 Wieselburg (AT)
(72) Erfinder: WEBER, Emanuel, 2500 Baden (AT); FRITZ, Gerald, 2831 Warth (AT)
(74) Vertreter: Patentanwaltskanzlei Matschnig & Forsthuber OG
(86) Internationale Anmeldenummer: PCT/AT2016/050167
(87) Internationale Veröffentlichungsnummer: WO 2016/191781

(56) Entgegenhaltungen:
- EP-A2- 1 318 701
- WO-A1-2008/068682
- WO-A1-2014/087874
- WO-A2-2012/162203
- DE-A1-102004 060 483
- JP-A- 2006 261 160
- JP-A- 2007 165 001
- JP-A- 2012 099 337
- US-A1- 2013 207 559
- US-A1- 2014 085 731
- US-B1- 7 439 945

## Beschreibung

Die Erfindung bezieht sich auf eine Beleuchtungseinrichtung für Fahrzeuge, die zumindest einen LED-Zweig mit zumindest einer LED aufweist, sowie mit einer geregelten LED-Stromversorgung und einer Ansteuerung, welche Dimmsignale für die LEDs liefert.

Aus dem Dokument US 20130207559 A1 ist eine Beleuchtungseinrichtung für Fahrzeuge bekannt geworden. Diese weist einen LED-Zweig mit zumindest einer LED, eine geregelte LED-Stromversorgung sowie eine Ansteuerung (202) hierzu auf.

Durch den Einsatz von LEDs als Lichtquelle für Fahrzeugscheinwerfer und andere Beleuchtungseinrichtungen an Fahrzeugen, wie z.B. Blinkleuchten, sind den Designern neue Möglichkeiten bei der Auslegung der einzelnen Lichtfunktionen ermöglicht worden. Neben der tatsächlichen Funktion wird immer mehr Augenmerk auf das Design gelegt. Ein wesentliches Detail ist der optische Übergang zwischen dem Umschalten von zwei oder mehr Lichtfunktionen. Ein "hartes" Ein- bzw. Ausschalten einer Lichtfunktion ist weitgehend unerwünscht. Stattdessen wird der Einschalt-, sowie der Ausschaltvorgang über eine Rampe kontinuierlich realisiert. Ein dabei auftretendes Problem ist der Beginn einer Einschaltphase bzw. das Ende einer Ausschaltphase, da zu diesen Zeiten die LEDs und damit das abgestrahlte Licht in sehr kleinen Schritten gegen Null gedimmt werden.

Üblicherweise erfolgt dies durch ein PWM-Dimmen der Lichtfunktion von 100% auf 0% bzw. von 0% auf 100%. Speziell bei PWM-Werten kleiner als 10% tritt hier jedoch oft ein sichtbares Flackern der Lichtfunktion auf. Um ein solches, im praktischen Betrieb untragbares Flackern zu verhindern, sind daher besondere Vorkehrungen zu treffen. Eine mögliche Maßnahme liegt darin, eine analoge Reduktion des Stromwertes durch die Stromversorgung als solche vorzunehmen. Man kann den PWM-Wert (Tastverhältnis) nicht unter einen gewissen Grenzwert, z.B.10% setzen und es tritt somit kein sichtbares Flackern auf. In diesem Fall ist es zwingend notwendig, dass die Stromversorgung die analoge Regelung jedes einzelnen LED-Stromes vornimmt, was jedoch bedeutet, dass für jede LED bzw. jeden LEDZweig eine eigene Stromversorgung erforderlich ist, was mit einem hohen Aufwand verbunden sein kann.

Eine Aufgabe der Erfindung liegt in der Schaffung einer Beleuchtungseinrichtung, bei welcher flexibel und ohne hohen Aufwand ein flackerfreies Dimmen einzelner Lichtfunktionen ermöglicht wird.

Diese Aufgabe wird mit einer Beleuchtungseinrichtung nach Anspruch 1 gelöst.

Dank der Erfindung kann eine einzige geregelte Stromversorgung Verwendung finden und auch mehrere in Serie und/oder parallel geschaltete LED-Zweige oder -Stränge können mit individuell einstellbarem Strom betrieben werden. Insbesondere ermöglicht die Erfindung ein stufenloses Dimmen von 0% bis 100% ohne sichtbares Flackern des Lichtbildes.

Eine besonders verlustfreie Ansteuerung kann sich ergeben, falls jeder der elektronischen Schalter in Serie mit dem jeweiligen LED-Zweig angeordnet ist.

Bei einer anderen ökonomischen Ausbildung kann vorgesehen sein, dass zumindest zwei LED-Zweige in Serie geschaltet sind.

Andererseits kann es in bestimmten Fällen auch zweckmäßig sein, wenn zumindest zwei LED-Zweige parallel geschaltet sind. In diesem Fall empfiehlt es sich, dass die geregelte LED-Stromversorgung als Konstantspannungsquelle ausgebildet ist.

Bei vorteilhaften und einfach aufzubauenden Varianten kann es sinnvoll sein, wenn der Analogregler einen Operationsverstärker und einem von diesem angesteuerten Transistor aufweist.

Weiters ist es empfehlenswert, wenn dem Analogregler als Regelgröße ein dem Strom durch den zumindest einen Nebenstromkreis proportionales Signal zugeführt ist.

Bei anderen zweckmäßigen Ausbildungen kann es angebracht sein, wenn im Nebenstromkreis ein von dem abgezweigten Strom durchflossener Widerstand angeordnet ist.

Es kann in bestimmten Fällen durchaus zweckmäßig sein, wenn der elektronische Schalter parallel zu dem zumindest einen LED-Zweig geschaltet ist.

Die Erfindung samt weiterer Vorteile ist im Folgenden an Hand beispielsweiser Ausführungen näher erläutert, die in der Zeichnung veranschaulicht sind. In dieser zeigen
Fig. 1 eine vereinfacht dargestellte Schaltungsanordnung für eine erfindungsgemäße Beleuchtungseinrichtung in einer ersten Ausführungsform,
Fig. 2 eine zweite beispielsweise Schaltungsanordnung für eine erfindungsgemäße Beleuchtungseinrichtung und
Fig. 3 dritte beispielsweise Schaltungsanordnung für eine erfindungsgemäße Beleuchtungseinrichtung.

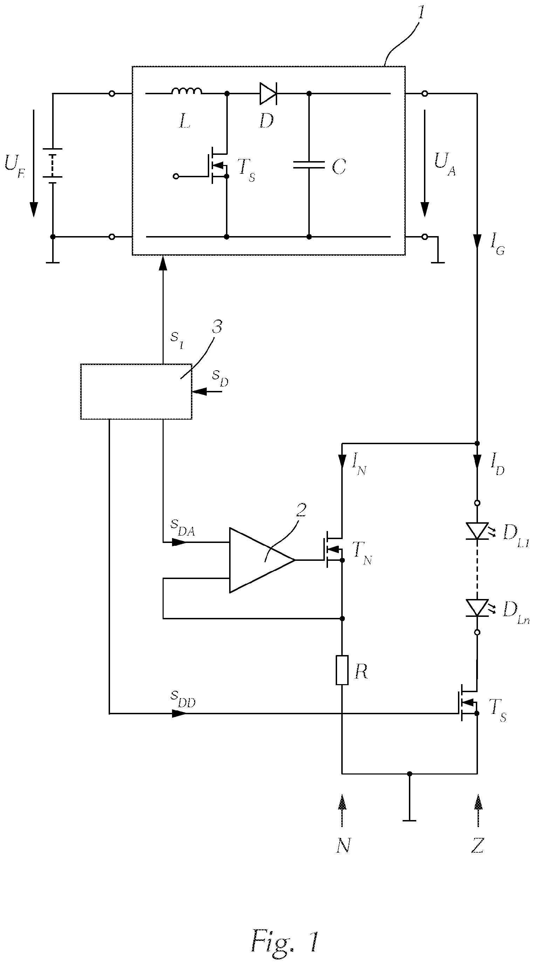

In **Fig. 1** erkennt man eine geregelte Stromversorgung 1, die im vorliegenden Fall als Hochsetzsteller ausgebildet ist, in welchem symbolisch eine Induktivität L, ein Schalttransistor Ts, eine Diode D und ein Kondensator C eingezeichnet sind. Dieser Hochsetzsteller bzw. die Stromversorgung 1 wird an einer Eingangsspannung U_{E}, beispielsweise jener einer Autobatterie, betrieben und liefert im vorliegenden Fall einen konstanten Ausgangsstrom I_{G}, wobei am Ausgang der Stromversorgung eine Spannung U_{A} anliegt. Mit diesem Ausgangsstrom I_{G} wird ein LED-Zweig Z gespeist, der ein oder mehrere LEDs D_{L1} ... D_{Ln} aufweist und in dessen Zweig weiters ein elektronischer Schalter T_{S}, im Allgemeinen ein Schalttransistor geschaltet ist.

Parallel zu dem LED-Zweig Z liegt zum Abzweigen eines Teilstroms I_{N} ein geregelter Nebenstromkreis N, der hier aus einem Transistor T_{N} und einem Widerstand R in Serie mit diesem Transistor besteht, wobei der Transistor T_{N} von einem Operationsverstärker 2 angesteuert wird. Der Operationsverstärker 2 erhält als Regelsignal den am Widerstand R auftretenden Spannungsabfall, welcher dem Strom I_{N} proportional ist an einem Eingang und an seinem anderen Eingang ein analoges Dimmsignal s_{DA}, das von einer Ansteuerung 3 geliefert wird. Diese Ansteuerung liefert auch ein digitales Dimmsignal s_{DD} an dem elektronischen Schalter, d.h. an den Transistor Ts. Die Ansteuerung 3 kann gegebenenfalls auch ein Steuersignal si für die Steuerung der Stromversorgung 1 bereitstellen.

Man erkennt, dass somit für ein Dimmen der LEDS D_{L1} ... D_{Ln} zwei Möglichkeiten zur Verfügung stehen, nämlich einerseits über den elektronischen Schalter Ts, der von einem digitalen Dimmsignal S_{DD}, im Allgemeinen einem PWM-Signal angesteuert wird, und andererseits über den Stromregler im Nebenstromkreis, nämlich dem Transistor T_{N}, der über den Operationsverstärker 2 angesteuert und geregelt wird, und welcher einen Teilstrom I_{N} von den Gesamtstrom I_{G} abzweigen kann.

Die Ansteuerung 3, welcher auch ein externes Dimmsignal s_{T} zugeführt werden kann, arbeitet nun so, dass sie bei höheren Dimmwerten und entsprechend einem großen Tastverhältnis der PWM allein für das Dimmen maßgeblich ist, z.B. zwischen 100% und 10% Duty Cycle. In diesem Betriebszustand ist der Transistor T_{N} nicht leitend und es fließt kein Nebenstrom I_{N}, so dass der Strom I_{D} dem Gesamt I_{G} entspricht.

Soll jedoch unter diesen Wert herabgedimmt werden, würde eine Ansteuerung über eine PWM im Allgemeinen zu einem für das Auge unangenehmen Flackern des Lichteindruckes führen. Gemäß der Erfindung übernimmt nun der Nebenstromkreis die Regel- bzw. Dimmaufgabe, in dem er einen Teilstrom bzw. Nebenstrom I_{N} abzweigt, so dass auf diese Weise ab einen bestimmten Wert, z.B. 10% des gewünschten Dimmwertes bis 0% ein analoges Dimmen stattfindet. D.h. ab einem bestimmten Wert wird der Duty Cycle der PWM nicht weiter reduziert und der abgezweigte Strom I_{N} wird in dem Transistor T_{N} in Wärme umgesetzt. Da dieses Umsetzen elektrischer Energie in Wärme erst bei einem bereits stark abgesenkten Dimmpegel stattfindet, fällt es nicht wesentlich ins Gewicht.

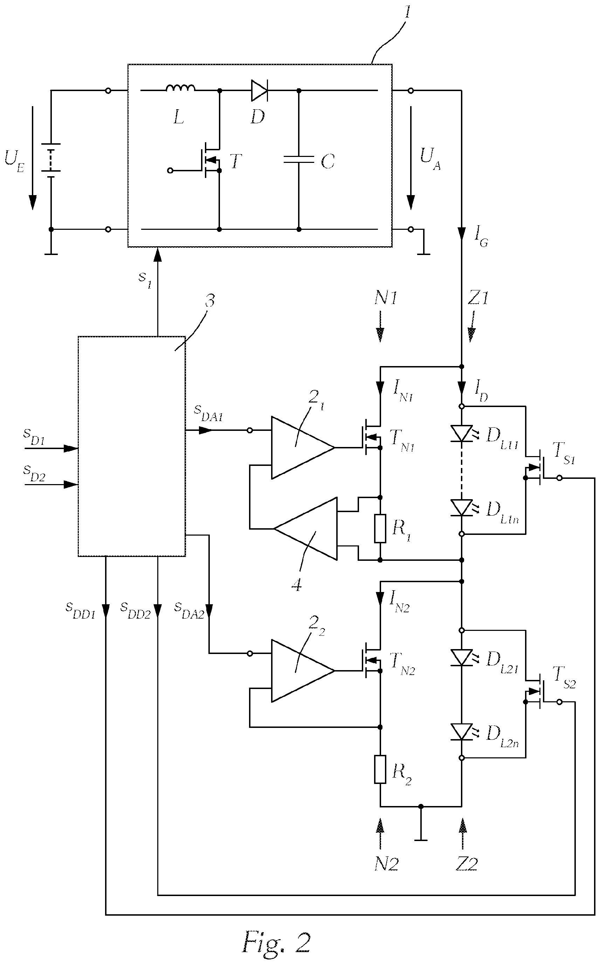

**Fig. 2** zeigt eine Schaltung ähnlich jener nach Fig. 1, wobei für gleiche Komponenten gleiche Bezugszeichen verwendet werden, jedoch ist diese Schaltung auf zwei dimmbare, in Serie geschaltete LED-Zweige Z1 und Z2 erweitert. Wieder werden diese Zweige von einer Stromversorgung 1 mit einem Gesamtstrom I_{G} versorgt, welcher durch den ersten Zweig Z1 mit den LEDs D_{L11} ... D_{L1n} und dem in Serie damit liegenden zweiten Zweig Z2 mit den LEDs D_{L21} ... D_{L2n} fließt.

Parallel zu dem ersten Zweig Z1 liegt ein Nebenstromkreis N1, gebildet von einem Transistor T_{N1}, der in Serie mit einem Sensorwiderstand R₁ liegt. Der Transistor T1 wird von einem Operationsvestärker 2₁ angesteuert, der an seinem ersten Eingang ein digitales Dimmsignal s_{DA1} erhält. Dem zweiten Eingang des Operationsverstärkers 2₁ wird das Ausgangssignal eines Differenzverstärkers 4 zugeführt, dessen beiden Eingänge mit dem Widerstand R₁ verbunden sind, so dass dem Operationsverstärker eine dem abgezweigten Strom I_{N1} entsprechende Spannung zugeführt wird. Der LED-Zweig Z1, bestehend aus den in Serie liegenden LEDs D_{L11} ... D_{L1n} ist von einem elektronischen Schalter T_{S1} überbrückt, im Allgemeinen ein Schalttransistor, der ein digitales Dimmsignal S_{DD1} erhält. Hier sei angemerkt, dass jeder LED-Zweig im einfachsten Fall auch lediglich auch eine einzige LED enthalten kann.

Für den zweiten LED-Zweig Z2, bestehend aus in Serie geschalteten LEDs D_{L21} ... D_{L2n} gilt hinsichtlich seiner Beschaltung zum Dimmen prinzipiell das Gleiche wie für den ersten Zweig Z1. Der Nebenstromkreis N2 enthält wiederum einen Transistor T_{N2}, der in Serie mit einem Sensorwiderstand R2 liegt, doch ist hier kein Differenzverstärker erforderlich, wie für den Nebenstromkreis N₁, da der Sensorwiderstand R₂ mit einem Anschluss an Masse liegt, so dass ein dem Nebenstrom I_{N2} entsprechendes Signal unmittelbar von R₂ zu dem zweiten Eingang eines Operationsverstärkers 2₂ geführt werden kann, welcher den Transistor T_{N2} ansteuert. An den ersten Eingang des Operationsverstärkers 2₂ wird ein analoges Dimmsignal s_{DA2} seitens der Ansteuerung 3 geliefert. Auch hier kann die Ansteuerung externe Dimmsignale s_{D1} und s_{D2} für die beiden LED-Zweige Z1 und Z2 und auch ein Steuersignal si an die Stromversorgung 1 liefern.

Der Unterschied der Ausgestaltung nach Fig. 2 zu jener nach Fig. 1 liegt darin, dass die Transistoren T_{S1} und T_{S2}, die mit einem PWM-Signal angesteuert werden, hier nicht in Serie mit einem LED-Zweig liegen, sondern parallel zu jedem LED-Zweig Z1, Z2. Da die beiden Zweige mit konstantem Strom gespeist werden, fließt je nach dem Tastverhältnis ein Teil des Stromes durch den parallel geschalteten Transistor T_{S1} bzw. T_{S2}, der jedoch im Allgemeinen so gewählt wird, dass er einen sehr niedrigen Bahnwiderstand hat, so dass auf diese Weise keine wesentlichen zusätzlichen Verluste entstehen. Auch hier wird mit PWM-Signalen vorzugsweise in einem Bereich von 100% bis etwa 10% gedimmt, jedenfalls bis zu einem Bereich, der kein Flackern der LEDs im Sinne eines unangenehmen Eindrucks auf einen Betrachter verursacht. Selbstverständlich kann der genannte untere Wert des Tastverhältnisses ein anderer sein als 10%, beispielsweise auch 15% oder 20%. Ab diesem festzulegenden Grenzwert wird in beiden Zweigen analog gedimmt, wobei die Funktion genau jener entspricht, die bereits im Zusammenhang mit Fig. 1 beschrieben wurde. Der Vorteil dieser Ausbildung nach Fig. 2 liegt auch darin, dass mit einer einzigen Stromversorgung, die hier einen konstanten Strom I_{G} liefert, das Auslangen gefunden werden kann, auch wenn zwei oder mehr LED-Zweige unabhängig voneinander gedimmt werden sollen.

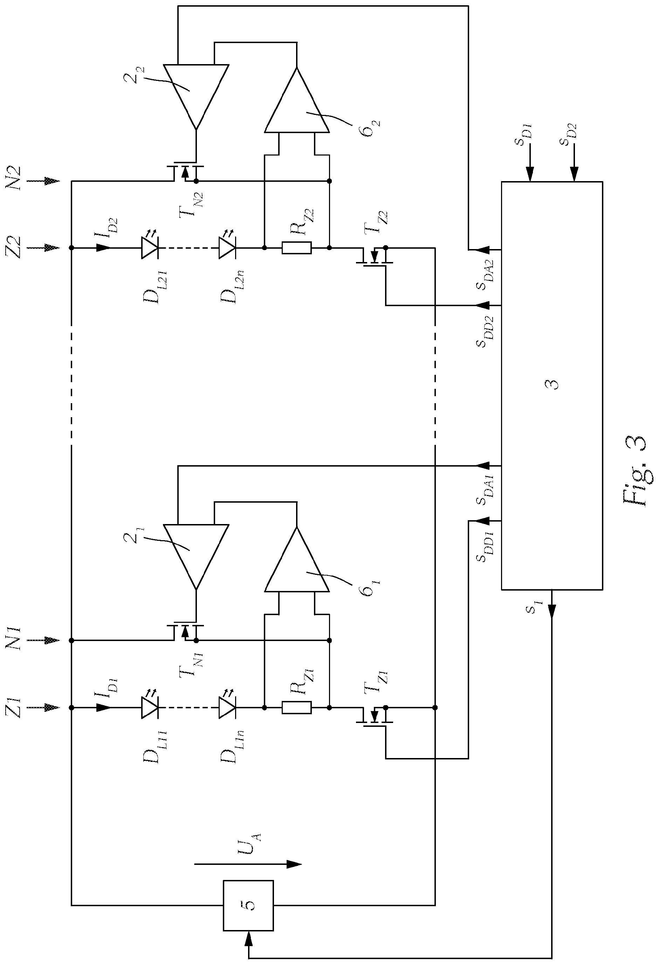

**Fig. 3** zeigt eine weitere Ausführungsform der Erfindung, die bezüglich des Vorhandenseins zweier LED-Zweige Z1 und Z2 mit analogen Nebenzweigen N1 und N2 jener nach Fig. 2 entspricht, wobei wiederum für gleiche oder vergleichbare Komponenten gleiche Bezugszeichen verwendet wurden.

Man erkennt jedoch, dass bei der Ausführung nach Fig. 3 die beiden LED-Zweige Z1 und Z2 mit den LEDs D_{L11} ... D_{L1n} und D_{L21} ... D_{L22} parallel an eine Konstantspannungsquelle 5 mit einer Ausgangsspannung U_{A} geschaltet sind. In jedem Zweig Z1 bzw. Z2 ist in Serie mit den LEDs ein elektronischer Schalter T_{Z1} bzw. T_{Z2} angeordnet und ebenso ein Sensorwiderstand Rzi bzw. R_{Z2}. Jeder der elektronischen Schalter T_{Z1}, T_{Z2} wird mit einem digitalen Dimmsignal S_{DD1} bzw. S_{DD2} angesteuert, wobei diese Signale vorzugsweise PWM-Signale sind und von der Ansteuerung 3 stammen, welcher auch extra Dimmsignale S_{D1} und S_{D2} zugeführt werden können. Ebenso kann die Ansteuerung 3 ein Steuersignal si an die Konstantspannungsquelle 5, die hier als geregelte LED-Stromversorgung dient, liefern.

Vergleichbar mit der Ausführung nach Fig. 2 ist auch hier jeder LED-Zweig Z1 bzw. Z2 von einem geregelten Nebenstromkreis N1 bzw. N2 überbrückt, wobei diese Nebenstromkreise je einen von einem Operationsverstärker 2₁, 2₂ angesteuerten Transistor T_{N1}, T_{N2} aufweisen. Jeder Operationsverstärker 2₁ und 22 erhält ein analoges Dimmsignal s_{DA1} bzw. s_{DA2} seitens der Ansteuerung 3 sowie ein Regelsignal von einem Differenzverstärker 61 bzw. 62, dessen Eingang der Spannungsabfall an dem Sensorwiderstand R_{Z1} bzw. R_{Z2} zugeführt ist. Diese Spannungsabfälle entsprechen den Strömen I_{D1} bzw. I_{D2} durch die LEDs der beiden LEDZweige Z1 und Z2.

Es soll klar sein, dass einerseits mehr als zwei LED-Zweige Z1, Z2 in der gezeigten Weise parallel zueinander liegen können und dass andererseits in jedem LED-Zweig ein, zwei oder mehr LEDs vorhanden sein können, sofern die Ausgangsspannung U_{A} der Konstantspannungsquelle 5 entsprechend bemessen ist.

Auch bei dieser Ausführungsform wird beim Dimmen ab einem gewissen Dimmpegel, der z.B. 10% beträgt und an der "Flackergrenze" liegt, von einem digitalen, PWM-Dimmen über die Serientransistoren T_{Z1} und T_{Z2} zu einem analogen Dimmen über die Nebenzweige N1 und N2 übergegangen. Die gezeigte Ausführung nach Fig. 3 kann vorteilhaft dann angewendet werden, wenn nicht allzu hohe Leistungen für die LED-Versorgung notwendig sind, wobei auch darauf zu achten ist, dass im PWM-Modus der analoge Nebenzweig sehr rasch reagieren muss, um Stromspitzen durch die LEDs zu vermeiden. Dabei kann der Analogregler in die PWM-Regelung über die Ansteuerung 3 mit einbezogen und während der PWMOff-Phase in einem Sample-and-Hold-Status gehalten werden.

## Patentansprüche

1. Beleuchtungseinrichtung für Fahrzeuge, aufweisend zumindest einen LED-Zweig (Z; Z1, Z2) mit zumindest einer LED (DL1...DLn; DL11...DL1n, DL21...DL2n), eine geregelte LED-Stromversorgung (1, 5) und eine Ansteuerung (3), welcher ein externes Dimmsignal (SD) zuführbar ist, jeweilig einen den zumindest einen LED-Zweig (Z; Z1, Z2) zugeordneten elektronischen Schalter (T_{S}; T_{S1}, T_{S}; T_{S1}, T_{S2}), wobei jedem der elektronischen Schalter ein jeweiliges PWM-Dimmsignal (s_{DD}; s_{DD1}, s_{DD2}) von der Ansteuerung (3) zugeführt ist, und jeweilig einen mit den zumindest einen LED-Zweig (Z; Z1, Z2) zum Abzweigen eines Teilstroms (I_{N}, I_{N1}, I_{N2}) verbundenen geregelten Nebenstromkreis (N; N1, N2),
**dadurch gekennzeichnet, dass**
jeder der Nebenstromkreise einen Analogregler (2, T_{N}; 2₁, T_{N1}, 2₂, T_{N2}) aufweist, welchem ein analoges Dimmsignal (s_{DA}; s_{DA1}, s_{DA2}) von der die Ansteuerung (3) zugeführt ist, wobei die Ansteuerung (3) dazu eingerichtet ist, dass bei Dimmwerten unter einem festlegbaren Grenzwert durch Abzweigen eines Teilstroms (I_{N}, I_{N1}, I_{N2}) über den jeweiligen Nebenstromkreis (N; N1, N2) mittels des jeweiligen Analogreglers der jeweilige LED-Zweig gedimmt wird, und wobei ein Tastverhältnis des PWM-Dimmsignals nicht weiter reduziert wird, und bei Dimmwerten bis zu dem festlegbaren Grenzwert kein Teilstrom abgezweigt wird und ein Dimmen nur über den jeweiligen elektronischen Schalter (T_{S}; T_{S1}, T_{S}; T_{S1}, T_{S2}) digital zu steuern.

2. Beleuchtungseinrichtung nach Anspruch 1, **dadurch gekennzeichnet, dass** jeder der elektronischen Schalter (T_{S}; T_{Z1}, T_{Z2}) in Serie mit dem jeweiligen LED-Zweig des zumindest einen LED-Zweigs (Z; Z1, Z2) angeordnet ist.

3. Beleuchtungseinrichtung nach Anspruch 1 oder 2, **dadurch gekennzeichnet, dass** zumindest zwei LED-Zweige (Z; Z1, Z2) in Serie geschaltet sind.

4. Beleuchtungseinrichtung nach einem der Ansprüche 1 bis 3, **dadurch gekennzeichnet, dass** zumindest zwei LED-Zweige (Z; Z1, Z2) parallel geschaltet sind.

5. Beleuchtungseinrichtung nach Anspruch 4, **dadurch gekennzeichnet, dass** die geregelte LED-Stromversorgung (5) als Konstantspannungsquelle ausgebildet ist.

6. Beleuchtungseinrichtung nach einem der Ansprüche 1 bis 5, **dadurch gekennzeichnet, dass** jeder der Analogregler einen Operationsverstärker (2; 2₁, 2₂) und einem von diesem angesteuerten Transistor (T_{N}; T_{N1}, T_{N2}) aufweist.

7. Beleuchtungseinrichtung nach einem der Ansprüche 1 bis 6, **dadurch gekennzeichnet, dass** jedem der Analogregler als Regelgröße ein dem Strom (I_{N}) durch den jeweiligen Nebenstromkreis (N; N1, N2) proportionales Signal zugeführt ist.

8. Beleuchtungseinrichtung nach einem der Ansprüche 1 bis 7, **dadurch gekennzeichnet, dass** jeder Nebenstromkreis (N; N1, N2) einen von dem abgezweigten Strom (I_{N}) durchflossenen Widerstand (R; R1, R2) aufweist.

9. Beleuchtungseinrichtung nach einem der Ansprüche 1 und 3 bis 8, **dadurch gekennzeichnet, dass** jeder der elektronischen Schalter (T_{S1}, T_{S2}) parallel zu dem jeweiligen LED-Zweig (Z; Z1, Z2) geschaltet ist.

## Claims

1. Lighting device for vehicles, comprising at least one LED branch (Z; Z1, Z2) with at least one LED (DL1... DLn; DL11...DL1n, DL21... DL2n), a regulated LED power supply (1, 5) and a drive (3) to which an external dimming signal (SD) can be supplied, for each LED branch an electronic switch (TS; TS1, TS; TS1, TS2), each of the electronic switches being supplied with a respective PWM dimming signal (sDD; sDD1, sDD2) from the drive (3), and for each LED branch a regulated auxiliary circuit (N; N1, N2) connected to the at least one LED branch (Z; Z1, Z2) for branching off a partial current (IN, IN1, IN2),
**characterized in that**
each of the secondary circuits has an analog controller (2, TN; 21, TN1, 22, TN2) to which an analog dimming signal (sDA; sDA1, sDA2) is supplied by the drive (3), the drive (3) being set up in such a way that, in the case of dimming values below a definable limit value, a controlled secondary circuit (N; N1, N2) is established by branching off a partial current (IN, IN1, IN2) via the respective secondary circuit (N; N1, N2); N1, N2) by means of the respective analog controller, the respective LED branch is dimmed, and wherein a duty cycle of the PWM dimming signal is not reduced further, and at dimming values up to the definable limit value no partial current is branched off and dimming is controlled digitally only via the respective electronic switch (TS; TS1, TS; TS1, TS2).

2. Lighting device according to claim 1, **characterized in that** each of the electronic switches (TS; TZ1, TZ2) is arranged in series with the respective LED branch of the at least one LED branch (Z; Z1, Z2).

3. Lighting device according to claim 1 or 2, **characterized in that** at least two LED branches (Z; Z1, Z2) are connected in series.

4. Lighting device according to one of claims 1 to 3, **characterized in that** at least two LED branches (Z; Z1, Z2) are connected in parallel.

5. Lighting device according to claim 4, **characterized in that** the regulated LED power supply (5) is designed as a constant voltage source.

6. Lighting device according to one of the claims 1 to 5, **characterized in that** each of the analog controllers has an operational amplifier (2; 21, 22) and a transistor (TN; TN1, TN2) driven by the latter.

7. Lighting device according to one of the claims 1 to 6, **characterized in that** a signal proportional to the current (IN) through the respective secondary circuit (N; N1, N2) is supplied to each of the analog controllers as a controlled variable.

8. Lighting device according to one of the claims 1 to 7, **characterized in that** each secondary circuit (N; N1, N2) has a resistor (R; R1, R2) through which the branched-off current (IN) flows.

9. Lighting device according to any one of claims 1 and 3 to 8, **characterized in that** each of the electronic switches (TS1, TS2) is connected in parallel with the respective LED branch (Z; Z1, Z2).

## Revendications

1. Dispositif d'éclairage pour véhicules, présentant au moins une branche de LED (Z ; Z1, Z2) avec au moins une LED (DL1... DLn ; DL11...DL1n, DL21... DL2n), une alimentation en courant régulée pour LED (1, 5) et une commande (3) à laquelle peut être amené un signal de variation externe (SD), respectivement un commutateur électronique (TS ; TS1, TS2) associé à la au moins une branche de LED (Z ; Z1, Z2) ; TS1, TS2), un signal de variation PWM respectif (sDD ; sDD1, sDD2) étant amené à chacun des commutateurs électroniques par la commande (3), et respectivement un circuit secondaire régulé (N ; N1, N2) relié à l'au moins une branche de LED (Z ; Z1, Z2) pour dériver un courant partiel (IN, IN1, IN2),
**caractérisé en ce que**
chacun des circuits secondaires présente un régulateur analogique (2, TN ; 21, TN1, 22, TN2) auquel est amené un signal de variation analogique (sDA ; sDA1, sDA2) de la commande (3), la commande (3) étant conçue pour que, dans le cas de valeurs de variation inférieures à une valeur limite pouvant être fixée, un courant partiel (IN, IN1, IN2) soit dérivé par le circuit secondaire respectif (N ; N1, N2) au moyen du régulateur analogique respectif, la branche LED respective est graduée, et où un rapport cyclique du signal de gradation PWM n'est pas davantage réduit, et pour des valeurs de gradation jusqu'à la valeur limite pouvant être fixée, aucun courant partiel n'est dérivé et une gradation n'est commandée numériquement que par le commutateur électronique respectif (TS ; TS1, TS ; TS1, TS2).

2. Dispositif d'éclairage selon la revendication 1, **caractérisé en ce que** chacun des commutateurs électroniques (TS ; TZ1, TZ2) est disposé en série avec la branche de LED respective de la au moins une branche de LED (Z ; Z1, Z2).

3. Dispositif d'éclairage selon la revendication 1 ou 2, **caractérisé en ce qu'**au moins deux branches de LED (Z ; Z1, Z2) sont connectées en série.

4. Dispositif d'éclairage selon l'une des revendications 1 à 3, **caractérisé en ce qu'**au moins deux branches de LED (Z ; Z1, Z2) sont connectées en parallèle.

5. Dispositif d'éclairage selon la revendication 4, **caractérisé en ce que** l'alimentation électrique régulée des LED (5) est conçue comme une source de tension constante.

6. Dispositif d'éclairage selon l'une des revendications 1 à 5, **caractérisé en ce que** chacun des régulateurs analogiques comprend un amplificateur opérationnel (2 ; 21, 22) et un transistor (TN ; TN1, TN2) commandé par celui-ci.

7. Dispositif d'éclairage selon l'une des revendications 1 à 6, **caractérisé en ce que** chacun des régulateurs analogiques est alimenté en tant que grandeur de régulation par un signal proportionnel au courant (IN) traversant le circuit secondaire respectif (N ; N1, N2).

8. Dispositif d'éclairage selon l'une des revendications 1 à 7, **caractérisé en ce que** chaque circuit secondaire (N ; N1, N2) comporte une résistance (R ; R1, R2) traversée par le courant dérivé (IN).

9. Dispositif d'éclairage selon l'une des revendications 1 et 3 à 8, **caractérisé en ce que** chacun des interrupteurs électroniques (TS1, TS2) est connecté en parallèle avec la branche de LED respective (Z ; Z1, Z2).
